# FASCICULE DE BREVET EUROPEEN

(11) **EP 2 427 659 B1**
(45) Date de publication et mention de la délivrance du brevet: **11.10.2017**
(21) Numéro de dépôt: 10715886.7
(22) Date de dépôt: 04.05.2010
(51) Int. Cl.: F04D 29/54, F01D 5/22, F01D 9/04, F02C 6/08

(54) **VIROLE POUR STATOR DE TURBOMOTEUR D'AÉRONEF Á FENTES DE DÉCHARGEMENT MÉCANIQUE D'AUBES**
STATOR-RING FÜR TRIEBWERK EINES LUFTFAHRZEUGS MIT NUTEN FÜR DIE MECHANISCHE ENTLADUNG VON SCHAUFELN
STATOR SHROUD OF AIRCRAFT TURBINE ENGINE WITH SLOTS FOR RELIEVING MECHANICAL STRESS ON BLADES

(30) Priorité: 07.05.2009 FR 0953055
(43) Date de publication de la demande: 14.03.2012
(73) Titulaire: Snecma, 75015 Paris (FR)
(72) Inventeur: BERTOLI, Vincenzo, 77550 Moissy-Cramayel Cedex (FR)
(74) Mandataire: Ilgart, Jean-Christophe
(86) Numéro de dépôt international: PCT/EP2010/055998
(87) Numéro de publication internationale: WO 2010/128025

(56) Documents cités:
- EP-A1- 1 724 443
- WO-A2-2008/111957
- DE-A1-102007 050 916

## Description

La présente invention se rapporte de façon générale à un turbomoteur d'aéronef, de préférence du type turboréacteur ou turbopropulseur.

Plus particulièrement, l'invention concerne une partie de stator pour module d'un tel turbomoteur, cette partie comprenant une pluralité d'aubes de stator ainsi que deux viroles concentriques portant les aubes et destinées à délimiter radialement un flux primaire traversant ce turbomoteur, respectivement vers l'intérieur et vers l'extérieur.

L'invention concerne également ces viroles de délimitation du flux primaire.

Pour maintenir les aubes de stator qui s'étendent radialement vers l'intérieur à partir de la virole extérieure, celle-ci comprend habituellement une pluralité d'ajours espacés circonférentiellement les uns des autres, et réalisés traversants, à savoir chacun pratiqué dans l'épaisseur de la virole, généralement métallique.

Chaque ajour loge la tête de l'une des aubes de stator, cette tête étant fixée à la virole extérieure à l'aide d'une brasure pratiquée dans l'ajour concerné, s'étendant de manière continue tout autour de la tête d'aube.

De manière analogue, pour maintenir les aubes de stator qui s'étendent radialement vers l'extérieur à partir de la virole intérieure, celle-ci comprend habituellement une pluralité d'ajours espacés circonférentiellement les uns des autres, et réalisés traversants. Chaque ajour loge le pied de l'une des aubes de stator, ce pied étant fixé à la virole extérieure à l'aide d'une brasure pratiquée dans l'ajour concerné, s'étendant de manière continue tout autour de la tête d'aube.

Cette conception, pourtant largement répandue dans le domaine, présente l'inconvénient de voir apparaître fréquemment des criques au niveau du bord de fuite de la tête d'aube et/ou au bord de fuite du pied d'aube.

L'explication de ce phénomène néfaste pour la durée de vie des aubes de stator réside dans la présence de charges statiques très importantes au niveau du bord de fuite de la tête d'aube et/ou du pied d'aube, qui se traduisent par une marge dynamique trop faible, favorisant l'apparition de criques.

Pour faire face à cet inconvénient, il a été proposé d'épaissir les viroles, de manière à limiter ses déformations en fonctionnement, et donc à réduire les contraintes appliquées aux bords de fuite des têtes et pieds d'aubes. Néanmoins, cette solution est extrêmement pénalisante en termes de coût et de masse.

Il a également été proposé d'épaissir les aubes, mais cela conduit inévitablement à une perturbation du flux d'air les traversant, avec pour conséquence un impact négatif direct sur les performances globales du turbomoteur.

L'invention a donc pour but de remédier au moins partiellement au problème mentionné ci-dessus, relatif aux réalisations de l'art antérieur.

Pour ce faire, l'invention a pour objet une virole pour stator de module de turbomoteur d'aéronef pourvue d'une pluralité d'ajours traversants chacun destiné à recevoir une aube de stator, chaque ajour définissant un squelette s'étendant entre une première extrémité destinée à loger le bord de fuite de l'aube et une seconde extrémité destinée à loger le bord d'attaque de l'aube. Selon l'invention, à au moins l'un desdits ajours est associée une fente de déchargement mécanique pratiquée traversante sur la virole, et agencée en regard et à distance de ladite première extrémité de l'ajour selon la direction dudit squelette ladite fente présentant une forme générale de U ou de V à l'intérieur duquel est agencée ladite première extrémité de l'ajour. L'invention proposée permet globalement de réduire les charges statiques au niveau de la portion du bord de fuite de l'aube destinée à coopérer avec l'ajour équipé d'une telle fente de déchargement mécanique, de dégager de la marge dynamique, et donc de retarder fortement l'apparition de criques. Ainsi, lors de la déformation de la virole en fonctionnement, la zone fortement chargée est déportée au niveau des extrémités de la fente, à savoir à distance du bord de fuite, au sein même de la virole qui est largement capable de supporter ce chargement.

La solution apportée s'avère très satisfaisante en ce sens qu'elle n'engendre aucune pénalité en termes de masse, de coût ou de performance. De plus, il en résulte une durée de vie accrue des aubes, impliquant avantageusement que les périodes de visite/maintenance peuvent être davantage espacées dans le temps.

Naturellement, cette spécificité peut être appliquée à toutes les aubes de stator ou à seulement certaines d'entre-elles, en fonction des besoins et contraintes rencontrés. A titre d'exemple indicatif, dans le cas où la virole selon l'invention est sectorisée, il a été trouvé judicieux d'associer une telle fente de déchargement mécanique uniquement aux deux aubes situées aux extrémités de chaque secteur de virole. Néanmoins, toute autre configuration peut être envisagée, sans sortir du cadre de l'invention.

La réalisation des fentes de déchargement mécanique ne pénalise que très peu le procédé de fabrication de la virole, étant donné qu'elles peuvent être usinées en même temps que les ajours. D'ailleurs, il est avantageusement possible de réaliser de telles fentes sur les viroles déjà existantes.

Enfin, il est noté que la virole selon l'invention constitue préférentiellement la virole de délimitation radiale extérieure du flux primaire, c'est-à-dire celle des deux viroles de stator qui subit la plus grande déformation en fonctionnement, sous l'effet des déplacements des carters du turbomoteur. A cet égard, il est noté que sa déformation principale, tout comme celle de la virole intérieure s'opérant dans une moindre mesure, se caractérise par un diamètre grandissant en allant vers l'arrière, transformant globalement sa forme cylindrique en forme tronconique.

De préférence, ladite fente s'étend le long d'une ligne courbée vers l'ajour, pouvant s'étendre autour d'une partie de celle-ci.

De préférence, ledit ajour présente, de part et d'autre du squelette, une partie intrados et une partie extrados se rejoignant au niveau desdites première et seconde extrémités de l'ajour, et ladite fente s'étend également en regard et à distance des portions des parties intrados et extrados qui se rejoignent au niveau de ladite première extrémité de l'ajour. La fente peut s'étendre autour de la partie arrière de l'ajour à une distance de celui-ci qui reste sensiblement constante. Ladite fente présente une forme générale de U ou de V à l'intérieur duquel est agencée ladite première extrémité de l'ajour, pour un meilleur déchargement du bord de fuite de l'aube.

De préférence, ladite fente est comblée par un matériau de remplissage. La fonction principale recherchée par la mise en place de ce matériau est l'étanchéité du flux d'air traversant les aubes de stator, mais permet également de limiter les pertes thermiques. Ainsi, soit cette fente reste évidée, soit elle est comblée par ledit matériau de remplissage qui exerce un maintien mécanique nul ou négligeable.

Il peut par exemple s'agir d'un matériau de remplissage du type abradable, par exemple un composé de caoutchouc de silicone résistant aux variations de température, chargé de billes.

De préférence, la virole forme une structure sensiblement annulaire continue, de préférence d'une seule pièce. Alternativement, elle est réalisée par la mise en place bout à bout de secteurs angulaires de virole.

L'invention a également pour objet une partie de stator pour module de turbomoteur d'aéronef comprenant au moins une virole telle que présentée ci-dessus, ainsi qu'une pluralité d'aubes de stator.

De préférence, ladite virole est une virole extérieure, et chacun des ajours traversants reçoit la tête de l'une desdites aubes, fixée à la virole extérieure par une brasure agencée dans son ajour et s'étendant de façon continue toute autour de la tête d'aube. Ainsi, cette solution permet de conférer un maintien satisfaisant de la tête d'aube dans l'ajour grâce à la brasure continue, et d'éviter de trop charger le bord de fuite de cette tête d'aube en plaçant une fente de déchargement mécanique spécifique à la présente invention, écartée de ce bord de fuite.

Cette spécificité est simultanément ou alternativement applicable à la virole intérieure de la partie de stator. En effet, celle-ci comprend en outre une virole intérieure pourvue d'une pluralité d'ajours traversants recevant chacun le pied de l'une desdites aubes, fixé à la virole intérieure par une brasure agencée dans son ajour et s'étendant de façon continue toute autour du pied d'aube. Une fente de déchargement mécanique peut donc être associée à l'une ou plusieurs de ces ajours de la virole intérieure.

L'invention a également pour objet un module de turbomoteur d'aéronef comprenant au moins une partie de stator telle que décrite ci-dessus, le module étant préférentiellement un compresseur, de préférence haute pression, mais pouvant alternativement être une turbine, sans sortir du cadre de l'invention.

Enfin, l'invention a pour objet un turbomoteur pour aéronef comprenant au moins un module tel que décrit ci-dessus, le turbomoteur étant de préférence un turboréacteur.

D'autres avantages et caractéristiques de l'invention apparaîtront dans la description détaillée non limitative ci-dessous.

Cette description sera faite au regard des dessins annexés parmi lesquels ;
- la figure 1 représente une vue schématique partielle en demi-coupe d'un compresseur haute pression pour turbomoteur, selon un mode de réalisation préféré de la présente invention ;
- la figure 2 représente une vue de face d'un ensemble formant portion angulaire de la partie de stator du compresseur montré sur la figure 1 ;
- la figure 3 représente une vue partielle de dessus de l'ensemble montré sur la figure 2 ;
- les figures 3a et 3b montrent des alternatives de réalisation pour les fentes de déchargement mécanique pratiquées sur la virole de l'ensemble montré sur la figure 3 ; et
- les figures 4a et 4b montrent des exemples de réalisation de fentes déchargement mécanique additionnelle pratiquées sur la virole de l'ensemble montré sur la figure 3.

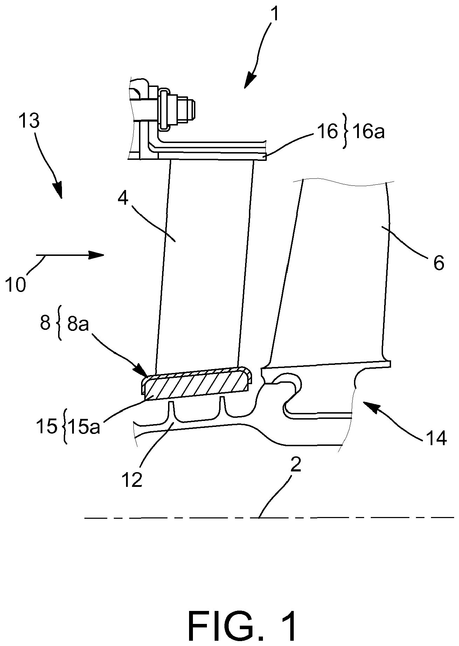

En référence tout d'abord à la figure 1, on peut apercevoir une partie d'un compresseur haute pression 1 pour turbomoteur, selon un mode de réalisation préféré de la présente invention. De façon connue, le compresseur présente, en alternance selon une direction axiale parallèle à l'axe 2 du compresseur, des aubes de stator 4 et des aubes de rotor 6. Les aubes de stator 4, réparties circonférentiellement autour de l'axe 2, s'intègrent dans une partie de stator 13 également objet de l'invention, comprenant en outre une virole intérieure 8 de délimitation radiale intérieure d'un flux annulaire primaire 10 traversant le turbomoteur, cette virole 8 portant les pieds des aubes 4 qui la traversent. Elle contient également une virole extérieure 16 de délimitation radiale extérieure du flux annulaire primaire 10, qui porte les têtes des aubes 4 qui la traversent.

A cet égard, il est noté que la partie de stator comprend également des éléments additionnels connus rapportés sur la virole 8, tel qu'un revêtement radialement intérieur abradable 15 formant piste d'étanchéité annulaire, contactée par un dispositif d'étanchéité 12 porté par l'étage de rotor 14 portant les aubes tournantes 6 et agencé en aval de la partie de stator concernée. Comme mentionné ci-dessus, le dispositif d'étanchéité tournant 12 est de façon connue du type à labyrinthe ou à léchettes.

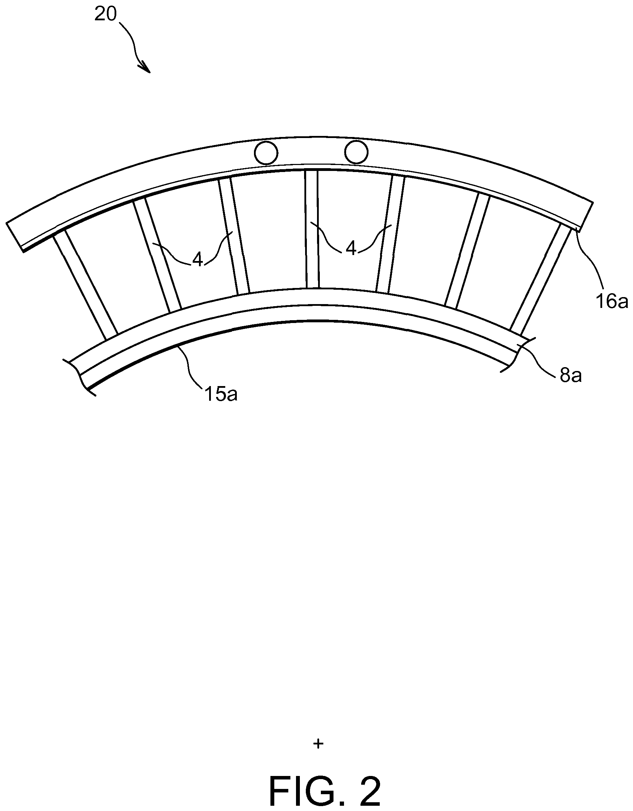

Dans le mode de réalisation préféré décrit, la partie de stator 13 forme une structure sensiblement annulaire d'axe 2, et est préférentiellement composée par la mise en place d'une pluralité d'ensembles 20 comme celui montré sur la figure 2, constituant chacun une portion angulaire ou circonférentielle de cette partie de stator. Comme visible sur cette figure, chaque ensemble 20 comprend un secteur angulaire de virole intérieure 8a portant une pluralité d'aubes de stator 4, la virole intérieure 8 résultant de la mise en place, bout à bout, de tous les secteurs 8a.

Dans la configuration segmentée représentée, les secteurs angulaires 8a (un seul visible sur la figure 2) formant conjointement la virole 8 sont donc de préférence dépourvus de liaisons mécaniques rigides directes les reliant les uns aux autres, leurs extrémités adjacentes étant en effet simplement placées en regard les unes les autres, avec ou sans jeu.

La segmentation opérée pour la virole 8 est également adoptée, d'une manière identique, pour le revêtement radialement intérieur abradable 15 formant piste d'étanchéité annulaire, seul un secteur angulaire 15a de ce revêtement étant donc porté fixement par le secteur de virole 8a.

De manière analogue, l'ensemble 20 comprend un secteur angulaire de virole extérieure 16a portant la pluralité d'aubes de stator 4, la virole extérieure 16 résultant donc de la mise en place de tous les secteurs 16a. Ici aussi, les secteurs angulaires 16a (un seul visible sur la figure 2) formant conjointement la virole 16 sont donc de préférence dépourvus de liaisons mécaniques rigides directes les reliant les uns aux autres, leurs extrémités adjacentes étant en effet simplement placées en regard les unes les autres, avec ou sans jeu.

En étant réalisée par la mise en place bout à bout de plusieurs de ces portions angulaires 20, la partie de stator 13 adopte donc une conception dite segmentée, par opposition à une conception également envisagée, dite continue, dans laquelle les viroles 8 et 16 sont chacune unique et continue sur 360°. Une alternative pourrait également consister à ne prévoir que l'une des deux viroles 8 et 16 soit unique et continue sur 360°, et l'autre virole sectorisée.

A titre indicatif, il est noté que le nombre d'ensembles/secteurs 20 pour former la partie de stator annulaire 13 précitée peut être compris entre 6 et 14, chaque ensemble 20 présentant de préférence la même étendue angulaire/circonférentielle.

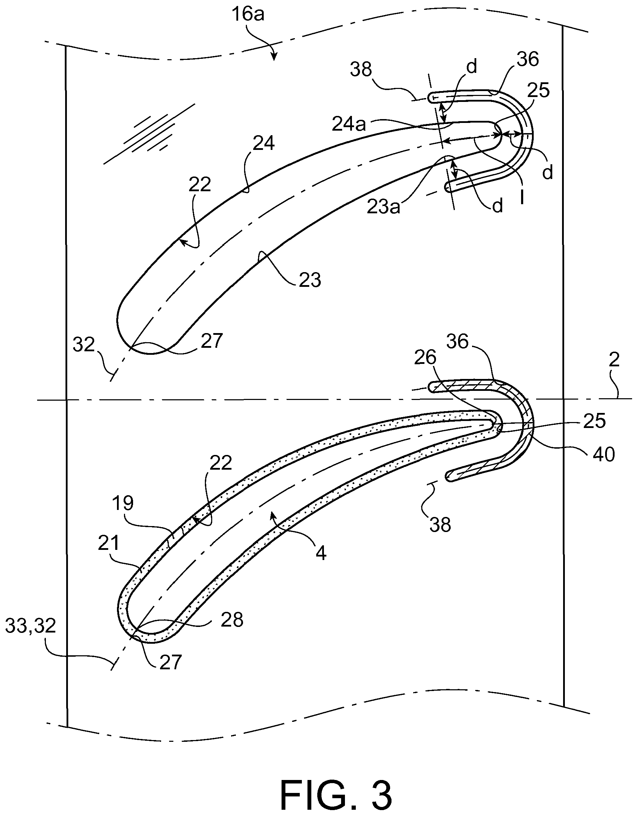

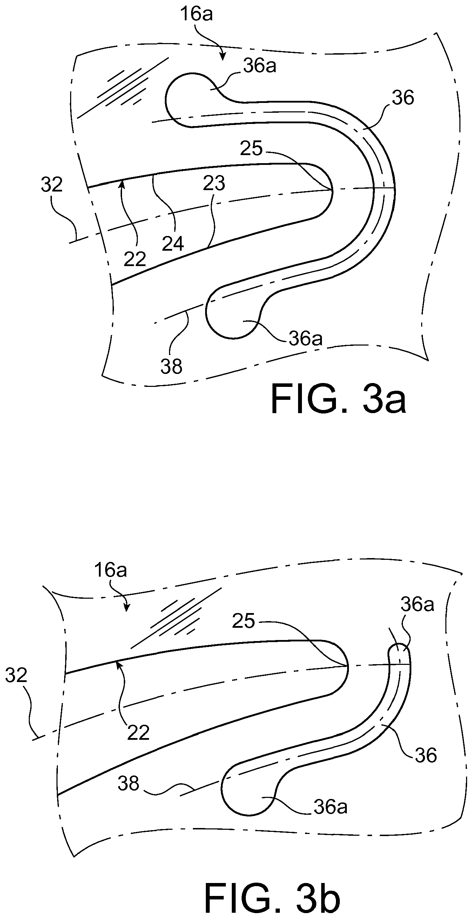

En référence à présent à la figure 3, on peut voir que le secteur angulaire de virole extérieure 16a est pourvu d'ajours 22 pratiqués dans l'épaisseur de ce secteur 16a, leur conférant un caractère traversant. Pour des raisons de clarté de la description, l'ajour 22 visible sur le haut de la figure 3 a été représenté sans son aube associée, contrairement à l'ajour 22 montré sur le bas de cette même figure, recevant la tête de son aube associée 4. Elle y est fixée rigidement par une brasure 21, réalisée de façon continue tout autour de la tête d'aube dans l'espace 19 délimité entre la paroi latérale de l'ajour 22 et la surface extérieure de la tête d'aube.

Chaque ajour 22 présente une paroi latérale comprenant une partie intrados 23 et une partie extrados 24 qui se rejoignent au niveau des deux extrémités avant et arrière de l'ajour. La première 25 de ces deux extrémités est destinée à loger le bord de fuite 26 de la tête de l'aube, tandis que la seconde 27 est destinée à loger le bord d'attaque 28 de la tête de l'aube.

Les parties intrados 23 et extrados 24 définissent un squelette 32 passant par les deux extrémités 25, 27, et correspondant de manière connue à la ligne médiane cheminant entre les parties intrados 23 et extrados 24. D'ailleurs, comme montré sur l'ajour du bas de la figure 3, le squelette 32 de l'ajour 22 est confondu avec le squelette 33 de la tête d'aube fixée par la brasure 21 dans cet ajour, les profils de l'ajour et de la tête d'aube étant en effet centrés et homothétiques.

L'une des particularités de la présente invention réside dans la réalisation, en association avec au moins l'un des ajours 22, d'une fente de déchargement mécanique 36 pratiquée traversante sur la virole, à distance de l'ajour 22 concerné, vers l'arrière. Plus précisément, la fente 36 est agencée en regard et à distance de la première extrémité 25 de l'ajour selon la direction du squelette 32, et se trouvent donc à écartée du bord de fuite de l'aube associée. Dans le mode de réalisation représenté, la fente 36 s'étend le long d'une ligne 38 courbée vers l'ajour, qui s'étend autour d'une partie arrière de celui-ci. Ici, la fente 36 et la ligne 38 prennent la forme générale d'un U ou d'un V, assimilable à une forme de fer à cheval, à l'intérieur duquel est agencée la partie arrière de l'ajour, avec la première extrémité 25 en regard et à distance du fond de ce U. A cet égard, il est noté que la distance « d » selon la direction du squelette 32, entre l'extrémité 25 de l'ajour et la fente 36, est comprise entre 0,02 et 0,1 fois, et encore plus préférentiellement entre 0,03 et 0,05 fois la longueur totale (non référencée) de la tête de l'aube 4 le long de ce squelette.

Dans cette configuration, les deux branches du U s'étendent également respectivement en regard et à distance des portions 23a, 24a des parties intrados 23 et extrados 24 qui se rejoignent au niveau de la première extrémité 25. La distance séparant les branches du U de leurs portions d'ajours associées 23a, 23b peut être identique ou proche de la distance « d », impliquant que le fente 36 s'étend autour de la partie arrière de l'ajour 22 à une distance de celui-ci qui reste sensiblement constante.

Il est indiqué que les branches du U ont une longueur sensiblement identique, et que la partie arrière du squelette 32 forme sensiblement axe de symétrie pour la fente 36 en forme de U.

La longueur « 1 » de l'ajour 22, selon la direction du squelette 32, qui pénètre dans le creux du U, est comprise entre 0,03 et 0,4 fois, et encore plus préférentiellement entre 0,05 et 0,2 fois la longueur totale (non référencée) de la tête de l'aube 4 le long de ce squelette.

Une première possibilité réside dans le fait de laisser la fente de déchargement mécanique 36 évidée, comme montré sur celle du haut de la figure 3. Alternativement, elle pourrait être remplie par un matériau de remplissage 40 visant essentiellement à assurer l'étanchéité du flux primaire, à savoir éviter les fuites au travers la fente 36. Un tel matériau de remplissage est schématisé par la référence 40 sur la fente du bas de la figure 3. Il peut par exemple s'agir d'un matériau de remplissage du type abradable, par exemple un composé de caoutchouc de silicone résistant aux variations de température, chargé de billes.

Si une telle fente de déchargement mécanique d'aube 36 est préférentiellement prévue seulement en association avec les aubes situées respectivement aux deux extrémités de l'ensemble 20, il pourrait néanmoins en être autrement, sans sortir du cadre de l'invention.

De plus, de telles fentes 36 de déchargement mécanique d'aube pourraient également être prévues en association avec les ajours traversants de la virole intérieure 8, qui reçoivent les pieds d'aubes. L'assemblage serait alors identique ou similaire à celui présenté sur la figure 3 pour la virole extérieure.

Sur la figure 3a, on peut voir une première alternative de réalisation pour la fente 36. Elle présente une forme globalement similaire à celle décrite ci-dessus, seules ses deux extrémités 36a ayant été élargies afin de réduire les contraintes subies par la virole à ces extrémités de fente. Ainsi, au lieu de présenter une largeur sensiblement identique sur toute sa longueur, la fente 36 intègre donc des extrémités 36a élargies et arrondies, de préférence orientées de façon à s'éloigner de l'ajour 22, afin d'orienter les contraintes dans une direction opposée à celle de l'aube.

La figure 3b montre une autre alternative de réalisation, dans laquelle la fente 36 correspond approximativement à la moitié de la fente représentée sur la figure 3a, l'une de ses extrémités 36a étant donc traversée par le squelette 32 de l'ajour 22.

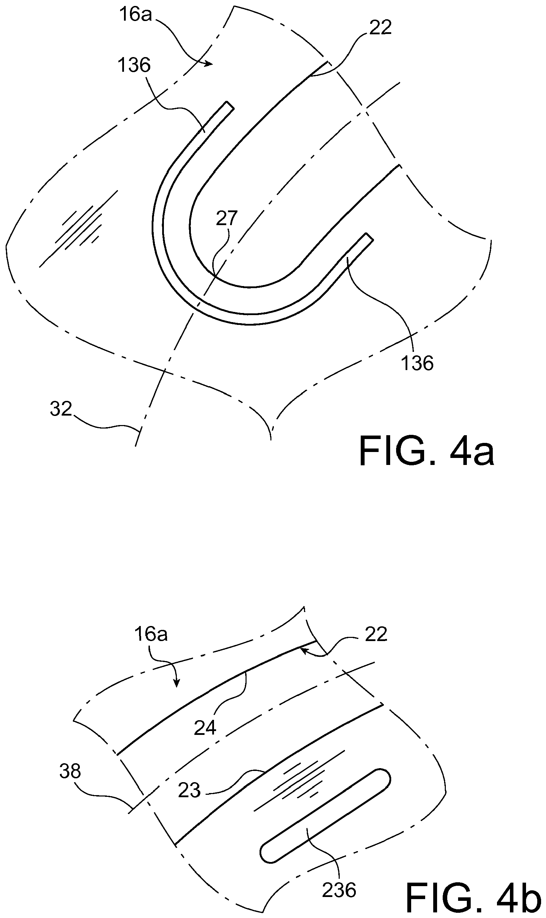

Si de telles fentes 36 sont associées au bord de fuite en raison d'un chargement statique important de cette portion de l'aube, des fentes analogues de déchargement mécanique pourraient aussi être associées à d'autres parties de l'aube 4, également susceptibles d'être très chargées en statique. Il s'agit par exemple du bord d'attaque de l'aube, que ce soit au niveau du pied ou de la tête de l'aube. Dans un tel cas, une fente de déchargement mécanique additionnelle 136 représentée sur la figure 4a peut être pratiquée traversante sur la virole, et agencée en regard et à distance de la seconde extrémité 27 de l'ajour, selon la direction du squelette 32. Une telle fente 136 peut alors prendre une forme analogue aux fentes 36 décrites ci-dessus, en étant orientée en direction de l'ajour 22, et pénétrée par la partie avant de ce dernier.

Simultanément ou alternativement, il peut s'agir d'une ou plusieurs fentes de déchargement mécanique 236 longeant la portion intrados 23 et/ou la portion extrados 24 de l'ajour, à distance de la portion concernée 23, 24, comme montré sur la figure 4b.

Bien entendu, diverses modifications peuvent être apportées par l'homme du métier à l'invention qui vient d'être décrite, uniquement à titre d'exemples non limitatifs.

## Revendications

1. Virole (16) pour stator de module de turbomoteur d'aéronef pourvue d'une pluralité d'ajours traversants (22) chacun destiné à recevoir une aube de stator (4), chaque ajour définissant un squelette (32) s'étendant entre une première extrémité (25) destinée à loger le bord de fuite (26) de l'aube et une seconde extrémité (27) destinée à loger le bord d'attaque (28) de l'aube,
**caractérisée en ce qu'**à au moins l'un desdits ajours (22) est associée une fente de déchargement mécanique (36) pratiquée traversante sur la virole, et agencée en regard et à distance de ladite première extrémité (25) de l'ajour selon la direction dudit squelette (32), ladite fente (36) présentant une forme générale de U ou de V à l'intérieur duquel est agencée ladite première extrémité (25) de l'ajour.

2. Virole selon la revendication 1, **caractérisée en ce que** ladite fente (36) s'étend le long d'une ligne (38) courbée vers l'ajour.

3. Virole selon la revendication 1 ou la revendication 2, **caractérisée en ce que** ledit ajour (22) présente, de part et d'autre du squelette (32), une partie intrados (23) et une partie extrados (24) se rejoignant au niveau desdites première et seconde extrémités (25, 27) de l'ajour, et **en ce que** ladite fente (36) s'étend également en regard et à distance des portions (23a, 24a) des parties intrados et extrados (23, 24) qui se rejoignent au niveau de ladite première extrémité (25) de l'ajour (22).

4. Virole selon l'une quelconque des revendications précédentes, **caractérisée en ce que** ladite fente (36) est comblée par un matériau de remplissage (40).

5. Virole selon l'une quelconque des revendications précédentes, **caractérisé en ce qu'**elle forme une structure sensiblement annulaire continue.

6. Virole selon l'une quelconque des revendications 1 à 4, **caractérisé en ce qu'**elle forme une structure sensiblement annulaire réalisée par la mise en place bout à bout de secteurs angulaires de virole (16a).

7. Partie de stator (13) pour module de turbomoteur d'aéronef comprenant au moins une virole (16) selon l'une quelconque des revendications précédentes, ainsi qu'une pluralité d'aubes de stator (4).

8. Partie de stator selon la revendication 7, **caractérisée en ce que** ladite virole est une virole extérieure (16), et **en ce que** chacun des ajours traversants (22) reçoit la tête de l'une desdites aubes (4), fixée à la virole extérieure par une brasure (21) agencée dans son ajour et s'étendant de façon continue toute autour de la tête d'aube (4).

9. Partie de stator selon la revendication 8, **caractérisée en ce qu'**elle comprend en outre une virole intérieure (8) pourvue d'une pluralité d'ajours traversants recevant chacun le pied de l'une desdites aubes (4), fixé à la virole intérieure par une brasure agencée dans son ajour et s'étendant de façon continue toute autour du pied d'aube.

10. Module (1) de turbomoteur d'aéronef comprenant au moins une partie de stator (13) selon l'une quelconque des revendications 7 à 9.

11. Module selon la revendication 10, caractérisé qu'il est un compresseur, de préférence haute pression.

12. Turbomoteur pour aéronef comprenant au moins un module (1) selon la revendication 10 ou la revendication 11.

## Patentansprüche

1. Stator-Ring (16) eines Triebwerkmoduls eines Luftfahrzeugs, der mit einer Vielzahl von Durchgangsöffnungen (22) versehen ist, welche jeweils zur Aufnahme einer Statorschaufel (4) vorgesehen ist, wobei jede Schaufel ein Gerüst (32) definiert, das sich zwischen einem ersten Ende (25), das zur Aufnahme der Abströmkante (26) der Schaufel ausgeführt ist, und einem zweiten Ende (26) erstreckt, das zur Aufnahme der Anströmkante (28) der Schaufel ausgebildet ist,
**dadurch gekennzeichnet, dass** mit wenigstens einer der Öffnungen (22) ein Schlitz zur mechanischen Entladung (36) verbunden ist, der durch den Ring hindurch ausgeführt ist und gegenüber und beabstandet von dem ersten Ende (25) der Öffnung (25) in der Richtung des Gerüsts (32) angeordnet ist, wobei der Schlitz (36) eine allgemeine U- oder V-Form aufweist, in deren Inneren das erste Ende (25) der Öffnung angeordnet ist.

2. Ring gemäß Anspruch 1, **dadurch gekennzeichnet, dass** sich der Schlitz (36) entlang einer zu der Öffnung hin gekrümmten Linie (38) erstreckt.

3. Ring nach Anspruch 1 oder Anspruch 2, **dadurch gekennzeichnet, dass** die Öffnung (22) auf beiden Seiten des Gerüsts (32) einen nach innen gewölbten Teil (23) und einen nach außen gewölbten Teil (24) aufweist, die auf der Höhe des ersten und zweiten Endes (25, 27) der Öffnung zusammentreffen, und dass sich der Schlitz (36) auch gegenüber und beabstandet von den Abschnitten (23a, 24a) der nach innen und nach außen gewölbten Teile (23, 24) erstreckt, welche auf der Höhe des ersten Endes (25) der Öffnung (22) zusammentreffen.

4. Ring nach einem der vorhergehenden Ansprüche, **dadurch gekennzeichnet, dass** der Schlitz (36) mit einem Füllmaterial (40) gefüllt ist.

5. Ring nach einem der vorhergehenden Ansprüche, **dadurch gekennzeichnet, dass** dieser eine im Wesentlichen ringförmige, durchgehende Struktur bildet.

6. Ring nach einem der vorhergehenden Ansprüche 1 bis 4, **dadurch gekennzeichnet, dass** dieser eine im Wesentlichen ringförmige Struktur bildet, die durch die Aneinanderreihung von winkelförmigen Abschnitten des Ringes (16a) verwirklicht ist.

7. Statorteil (13) für Triebwerksmodul eines Luftfahrzeugs mit mindestens einem Ring (16) nach einem der vorhergehenden Ansprüche sowie einer Vielzahl von Stator-Schaufeln (4).

8. Statorteil nach Anspruch 7, **dadurch gekennzeichnet, dass** der Ring aus einem Außenring (16) besteht, und dass jede der Durchgangsöffnungen (22) den Kopf einer der Schaufeln (4) aufnimmt, der über eine Lötstelle (21) an dem Außenring befestigt ist, welche in seiner Öffnung angeordnet ist und sich durchgehend um den gesamten Kopf der Schaufel (4) herum erstreckt.

9. Statorteil nach Anspruch 8, **dadurch gekennzeichnet, dass** dieser außerdem einen Innenring (8) umfasst, der mit einer Vielzahl von Durchgangsöffnungen versehen ist, die jeweils den Fuß einer der Schaufeln (4) aufnehmen, der über eine Lötstelle an dem Innenring befestigt ist, welche in seiner Öffnung angeordnet ist und sich durchgehend um den gesamten Fuß der Schaufel herum erstreckt.

10. Modul (1) des Triebwerks eines Luftfahrzeugs mit mindestens einem Statorteil (13) nach einem der Ansprüche 7 bis 9.

11. Modul nach Anspruch 10, **dadurch gekennzeichnet, dass** es aus einem Kompressor, vorzugsweise einem Hochdruckkompressor, besteht.

12. Triebwerk für Luftfahrzeug mit mindestens einem Modul (1) nach Anspruch 10 oder Anspruch 11.

## Claims

1. Shell (16) for a stator of an aircraft turbo-engine module, comprising a plurality of through openings (22) each designed to house a stator blade (4), each opening forming a skeleton (32) extending between a first end (25) designed to house the trailing edge (26) of the blade and a second end (27) designed to house the leading edge (28) of the blade,
**characterised in that** at least one of said openings (22) is associated with a mechanical load transfer slit (36) passing through the shell, and arranged facing and at a distance from said first end (25) of the opening along the direction of said skeleton (32), said slit (36) having a generally U or V shape and said first end (25) of the opening is located inside the hollow of the U or V.

2. Shell according to claim 1, **characterised in that** said slit (36) extends along a curved line (38) towards the opening.

3. Shell according to claim 1 or claim 2, **characterised in that** said opening (22) presents an intrados part (23) and an extrados part (24) on each side of the skeleton (32), that come together at said first and second ends (25, 27) of the opening, and **in that** said slit (36) also extends facing and at a distance from the portions (23a, 24a) of the intrados and extrados parts (23, 24) that come together at said first end (25) of the opening (22).

4. Shell according to any one of the previous claims, **characterised in that** said slit (36) is filled in by an infill material (40).

5. Shell according to any one of the previous claims, **characterised in that** it forms a continuous approximately annular structure.

6. Shell according to any one of claims 1 to 4, **characterised in that** it forms an approximately annular structure made by placement of angular shell sectors (16a) end to end.

7. Stator part (13) for an aircraft turbo-engine module comprising at least one shell (16) according to any one of the previous claims, and a plurality of stator blades (4).

8. Stator part according to claim 7, **characterised in that** said shell is an outer shell (16), and **in that** each of the through openings (22) houses the head of one of said blades (4), fixed to the outer shell by a weld (21) arranged in its opening and extending continuously all around the head of the blade (4).

9. Stator part according to claim 8, **characterised in that** it also comprises an inner shell (8) comprising a plurality of through openings each housing the root of one of said blades (4), fixed to the inner shell by a weld formed in its opening and extending continuously all around the blade root.

10. Module (1) of an aircraft turbo-engine comprising at least a stator part (13) according to any one of claims 7 to 9.

11. Module according to claim 10, **characterised in that** it is a compressor, preferably a high pressure compressor.

12. Turbo-engine for an aircraft, comprising at least one module (1) according to claim 10 or claim 11.
